# EUROPEAN PATENT APPLICATION

(11) **EP 4 756 768 A1**
(43) Date of publication of application: **10.06.2026**
(21) Application number: 24217310.2
(22) Date of filing: 03.12.2024
(51) Int. Cl.: G08B 13/196

(54) **SECURITY MONITORING SYSTEM**

(71) Applicant: Verisure Sàrl, 1290 Versoix (CH)
(72) Inventor: Hackett, Nicolas, 1290 Versoix (CH); Piedbois, Julien, 1290 Versoix (CH)
(74) Representative: Hansson Thyresson AB

(57) **Abstract**

A security monitoring system of a premises and a method for operating such a security monitoring system. The method comprises monitoring a geographic area surrounding a building on the premises, detecting an unmanned aerial vehicle, UAV, in the monitored geographic area increasing the sensitivity of the security monitoring system in response to the UAV being detected in the geographic area.

## Description

### TECHNICAL FIELD

The present invention relates to a security monitoring system and method for operating the security monitoring system.

### BACKGROUND

Security installations that are or include security monitoring systems for monitoring premises, often referred to as alarm systems, typically provide a means for detecting the presence and/or actions of people at premises and reacting to detected events. Commonly, such systems include sensors to detect opening and closing of doors and/or windows to provide a secure perimeter to the premises, creating one or more protected interior spaces, movement detectors to monitor spaces (both within and outside buildings) for signs of movement, microphones to detect sounds such as breaking glass, and image sensors to capture still or moving images of monitored zones. Such systems may be self-contained, with alarm indicators such as sirens and flashing lights that may be activated in the event of an alarm condition being detected. Such installations typically include a control unit (which may also be termed a central unit), generally mains powered, that is coupled to the sensors, detectors, cameras, etc. ("nodes"), and which processes received detections and determines a response. The central unit may also include a processor, a memory, and a data buss for executing software of the monitoring system and the processing of received detections. The central unit may be linked to the various nodes by wires, but increasingly is instead linked wirelessly, rather than by wires, since this facilitates installation and may also provide some safeguards against sensors/detectors effectively being disabled by disconnecting them from the central unit. Similarly, for ease of installation and to improve security, the nodes of such systems typically include an autonomous power source, such as a battery power supply, rather than being mains powered.

As an alternative to self-contained systems, a security monitoring system may include an installation at a premises, domestic or commercial, that is linked to a remote central monitoring station (CMS) where, typically, operators manage the responses required by different alarm and notification types. In such centrally monitored systems, the central unit at the premises installation typically processes detection events received from the nodes in the installation, and notifies the central monitoring station of only some of these, depending upon the settings of the system and the nature of the detected events. In such a configuration, the central unit at the installation is effectively acting as a gateway between the nodes and the central monitoring station. Again, in such installations the central unit may be linked by wires, or wirelessly, to the various nodes of the installation, and these nodes will typically be battery rather than mains powered.

Such security monitoring systems contribute to the safety and wellbeing of occupants of the protected premises, as well as safeguarding articles within the protected perimeter - which may of course not simply be limited to a house or dwelling but may also extend to the grounds of the house, protected by a boundary fence and gate, for example.

Embodiments of the present invention seek to provide enhanced security monitoring systems, and corresponding apps, methods and other implementations that improve the scope of security monitoring systems to address aspects of the problem of entry systems as well as providing new functionality and methods.

### SUMMARY

The invention is defined by the appended independent claims. Additional features and advantages of the concepts disclosed herein are set forth in the description which follows, and in part will be obvious from the description, or may be learned by practice of the described technologies. The features and advantages of the concepts may be realized and obtained by means of the instruments and combinations particularly pointed out in the appended claims. These and other features of the described technologies will become more fully apparent from the following description and appended claims, or may be learned by the practice of the disclosed concepts as set forth herein.

In a first aspect, according to embodiments of the invention, a method of operating a security monitoring system of a premises comprises monitoring a geographic area surrounding a building on the premises, detecting an unmanned aerial vehicle, UAV, in the monitored geographic area increasing the sensitivity of the security monitoring system in response to the UAV being detected in the geographic area. An advantage of these features is that the security monitoring system becomes more responsive to possible intrusions when the system has detected suspicious behavior. Another advantage is that the security of the premises may be improved.

In some embodiments the monitoring of the geographic area surrounding the premises comprises having a plurality of sensors directed outwards from the building. The advantage of a plurality of sensors directed outwards may be increased likelihood of identifying situations that may result in a future intrusion.

In some embodiments the plurality of sensors comprises at least one camera.

In some embodiments the detecting an unmanned aerial vehicle, UAV, comprises performing object recognition on one or more images captured during monitoring and identifying an object in the one or more images as an UAV.

In some embodiments the method further comprises identifying the detected UAV as performing reconnaissance of the premises. The advantage of this feature is that increasing the sensitivity of the system will be performed in view of more specific information and possibly decreasing the number of times the system increases sensitivity based on false predictions.

In some embodiments the identifying of the UAV as performing reconnaissance of the premises comprises detecting the UAV at a plurality of sides of the building.

In some embodiments the identifying of the UAV as performing reconnaissance of the premises comprises tracking the position of the UAV in relation to the building and identifying that the track of the UAV extends substantially around the building.

In some embodiments the increasing of the sensitivity of the security monitoring system comprises increasing the sensitivity of at least sections of the system for a specified period of time, wherein the specified period of time is at least 24 hours, at least 48 hours, at least a week, or at least a month.

In some embodiments increasing the sensitivity of the security monitoring system comprises lowering one or more threshold values in the security monitoring system, wherein an alert is generated when a threshold is passed.

According to another aspect a security monitoring system of a premises comprises at least one sensor arranged to monitor a geographic area surrounding a building on the premises, at least one control unit configured to detect an unmanned aerial vehicle, UAV, in the geographic area, based on data from the at least one sensor, wherein the at least one control unit is configured to increase the sensitivity of the security monitoring system in response to an UAV being detected in the geographic area. The advantaged relating to the features of this aspect of the invention correspond to the advantages relating to the corresponding features discussed above.

In some embodiments the control unit is further configured to identify detected UAVs as performing reconnaissance of the premises.

In some embodiments the plurality of sensors comprises at least one camera.

In some embodiments the at least one control unit is configured such that increasing the sensitivity of the security monitoring system comprises lowering one or more thresholds that should be passed by a signal from the at least one sensor for generating an alarm notice.

According to yet another aspect a data processing system in a security monitoring system, the data processing system comprising means for carrying out the method as described above. The advantaged relating to the features of this aspect of the invention correspond to the advantages relating to the corresponding features discussed above.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description. Hence, it is to be understood that this invention is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a sensor" or "the sensor" may include several sensors, and the like. Furthermore, the word "comprising" does not exclude other elements or steps.

### BRIEF DESCRIPTION OF THE DRAWINGS

In order to best describe the manner in which the above-described embodiments are implemented, as well as define other advantages and features of the disclosure, a more particular description is provided below and is illustrated in the appended drawings. Understanding that these drawings depict only exemplary embodiments of the invention and are not therefore to be considered to be limiting in scope, the examples will be described and explained with additional specificity and detail through the use of the accompanying drawings in which:
Fig. 1 is a schematic drawing showing a front elevation of stylized building monitored by a security monitoring system according to embodiments of the invention;
Fig. 2 is a schematic plan view of a premises protected by the security monitoring system, together with other elements of the system;
Fig. 3 is a flowchart depicting a reconnaissance alert process according to some embodiments of the invention.

Further, in the figures like reference characters designate like or corresponding parts throughout the several figures.

### DETAILED DESCRIPTION

Hereinafter, certain embodiments will be described more fully with reference to the accompanying drawings. It will be apparent to those skilled in the art that various modifications and variations can be made without departing from the inventive concept. Other embodiments will be apparent to those skilled in the art from consideration of the specification and practice disclosed herein. The embodiments herein are provided by way of example so that this disclosure will be thorough and complete, and will fully convey the scope of the inventive concept, and that the claims be construed as encompassing all equivalents of the present inventive concept which are apparent to those skilled in the art to which the inventive concept pertains. If nothing else is stated, different embodiments may be combined with each other.

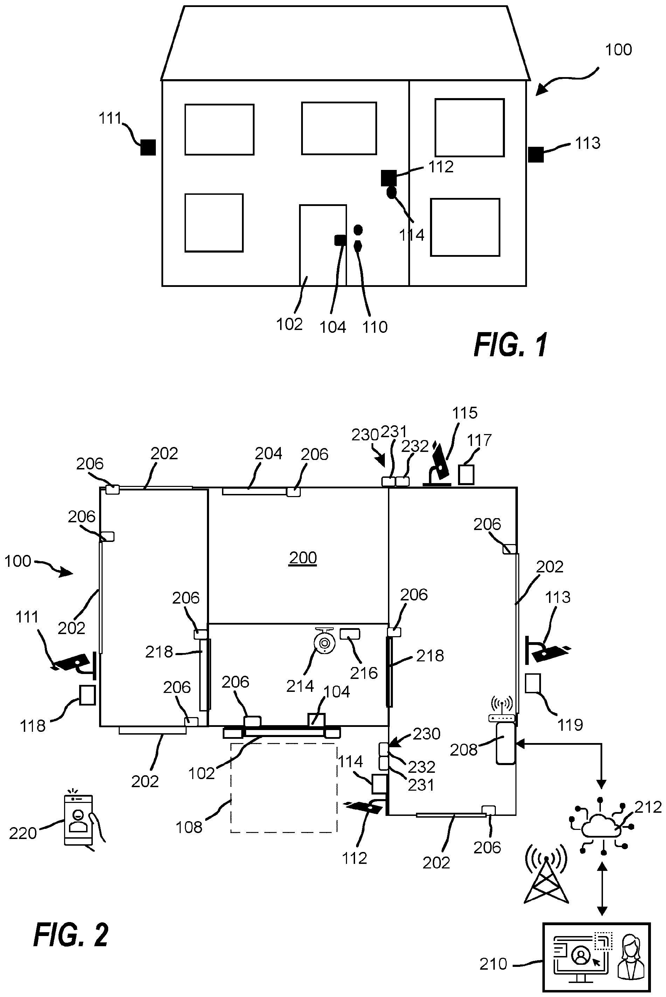

Figure 1 shows a view of the front of a premises 100 protected by a security monitoring system. The premises 100, here in the form of a house, has an exterior door, here front door, 102. The door gives access to a protected interior space 200. The security monitoring system secures at least part of a perimeter to the premises 100, and the door 102 constitutes an exterior closure in the secure perimeter giving access to a protected interior space 200 of the premises 100. A lock 104 on the exterior door is optionally electrically controlled so that it can be locked and unlocked remotely.

The premises 100 is equipped with an exterior monitoring sensor 112, e.g. image detection unit, such as a camera 112, such as a video camera, which is coupled to, or includes, a presence and/or movement detector 114. In some embodiments, the premises 100 is equipped with more than one exterior monitoring sensor 111, 112, 113, 115, e.g. image detection unit(s), and possibly also one or more interior image detection units 214. Any interior image detection unit 214 may be associated with an interior movement detector 216. In the description the exterior monitoring sensors 111, 112, 113, 115, will hereinafter generally be referred to as cameras or video cameras.

The video camera 112 and the movement detector 114 may be arranged to monitor the same exterior area 108 of premises, or the exterior in front of the house of premises 100. The video camera 111 and the movement detector 118 may be arranged to monitor the exterior at a left side of the house of the premises 100. The video camera 113 and the movement detector 119 may be arranged to monitor the exterior at a right side of the house of the premises 100. The video camera 115 and the movement detector 117 may be arranged to monitor the exterior at the back of the house of the premises 100.

Optionally, as shown, the facade of the house 100 carries an external keypad 110 by means of which a user can arm and/or disarm the security monitoring system, and unlock the lock 104. Optionally, the keypad is an internal keypad arranged in the interior of the house 100.

Figure 2 is a schematic part plan view of the premises 100 protected by the exterior and interior security monitoring system, and other elements of the system, corresponding generally to the premises of figure 1. The front door 102, with lock 104, leads into the protected interior space 200 of the premises. The premises comprises windows 202, each of which, and a rear door 204, being fitted with a sensor 206, respectively, to detect when they are opened. Each of the sensors 206 includes a radio transceiver to report events to a controller, or central unit, 208 of the security monitoring system. If one of the sensors 206 is triggered when the system is armed, a signal is sent to the central unit 208 which in turn may signal an alarm event to a remote central monitoring station 210. The central unit 208 is connected to the remote central monitoring station 210 via the Internet 212, either via a wired or a wireless connection. The central unit 208 may include a memory unit.

The system comprises one or more exterior image detection unit(s) 111, 112, 113, 115, configured to capture images of the specific outside area 108 of the premises 100. The exterior image detection units 111, 112, 113, 115, are e.g. cameras, such as a motion picture cameras, such as video cameras, or still image cameras. The exterior monitoring sensors 111, 112, 113, 115, also referred to as image detection units 111, 112, 113, 115, may each be associated with a movement detector 114, 117, 118, 119, which may be separate from or may be integral with the exterior image detection units 111, 112, 113, 115,. The movement detector may be a PIR sensor, a pixel movement sensor or any other suitable motion detection sensor. The interior video camera 214 may have a field of view including the front door 104 and/or the front door opening of the premises 100. The interior video camera 214 may be directed towards the front door 104.

The video camera 112 may be arranged, when the security monitoring system is armed, to capture images, such as video images, of an exterior area 108 of the house 100, e.g. a garden, in front of the house and signal an alarm event to a controller of the security monitoring system. The video camera 115 may be arranged to capture images of a backside of the house on the premises 100. The video cameras are preferably provided with, or being in operative connection with an audio interface 230 to enable (bi-)directional audio communication with anyone observed by the camera.

The video camera 112 may be arranged to capture video/images of the front of the house and a private area, e.g. a garden, in front of the house when the security monitoring system is armed, and signal an alarm event to the controller 208 of the security monitoring system.

The system may further comprise one or more audio interface(s) 230, optionally comprising both an audio input device 231, and an audio output device 232. The audio interface 230 may be separate from or may be integral with the video cameras 112, 115. The audio interface 230 may be configured to record sound/audio in the environment where it is arranged. Further, the video cameras 111 and 113 may also have an integral audio interface (not shown) or also be connected to one.

In some embodiments, the electrically controlled lock 104 is wirelessly coupled to the central unit 208.

One or more of the interior doors 218 of the premises may be provided with a sensor 206 to detect the opening/closing of the door.

The above mentioned items are preferably coupled to the central unit 208 using transceivers operating in the industrial scientific and medical (ISM) bandwidths, for example a sub-gigahertz bandwidth such as 868 MHz, and the communications are encrypted preferably using shared secret keys.

Also shown in figure 2 is a user device 220, preferably loaded with an appropriate app, and a public land mobile network (PLMN) by means of which the central monitoring station 210, and the central unit 208, may communicate with the user device 220.

Operation of the security monitoring system may be controlled by one or more of: the central unit 208, the remote central monitoring station 210, and a security monitoring app installed on the user device 220. For example, the remote monitoring station 210, if provided, may receive one or more signals from any one of: the exterior image detection units 111, 112, 113, 115, the keypad 110, the sensors 206, the audio interface 230. The remote monitoring station 210 may transmit commands for con-trolling any one or more of: the arm state of the alarm system (e.g. armed or unarmed); commanding a tripped alarm state to be signaled by the alarm system (e.g. by triggering one or more sirens to generate alarm noise); commanding a lock state of the door lock 104 (e.g. locked or unlocked), commanding operation of one or more cameras to transmit images to the remote monitoring unit/user device application/app. Communication with the remote monitoring station 210 may pass through the controller 208, as described above. In other embodiments, not including the remote monitoring station 210, or should communication with the remote monitoring station 210 be interrupted, operation of the alarm system may be controlled by the central unit 208. In yet other embodiments, the central unit 208 may be omitted, and the individual peripheral devices may communicate directly with the remote monitoring station 210.

The security monitoring system application/app is installed on a user device 220, here shown as a smartphone, although it could be almost any kind of electronic device, such as a laptop or desktop computer, a tablet such as an iPad, a smart watch, or even a television. The security monitoring system app may be used to display still or video images captured by the one or more cameras 111, 112, 113, 115, receive audio from the audio interface 230, provide position data of the device on which the app is installed to the controller 208, transmit input data provided by a user to the central unit 208, transmit locking and/or unlocking signals to the electronic lock 104, receive data from the central unit 208 and present these as notifications.

The video cameras 111, 112, 113, 115, may be configured to be armed or unarmed. In the armed state, they may be configured to capture video images. The cameras may be configured to capture images only as a response to a detection by the movement detector 114, 117, 118, 119, of a movement. Alternatively, the cameras may be configured to capture images continuously. The video cameras 111, 112, 113, 115, may be configured to capture images only when the audio interface 230 related to the specific camera captures an audio signal, or it may be configured to capture images continuously.

The video cameras 111, 112, 113, 115, may include an internal CPU, and/or be configured to communicate with the central unit 208. In the case of the video cameras 111, 112, 113, 115, comprising an internal CPU, they may be configured to communicate directly with the user device 220. In other cases, the video cameras 111, 112, 113, 115, may be configured to transmit data to the central unit 208 and/or the central monitoring station 210, any one of them may be configured to communicate with the user device 220.

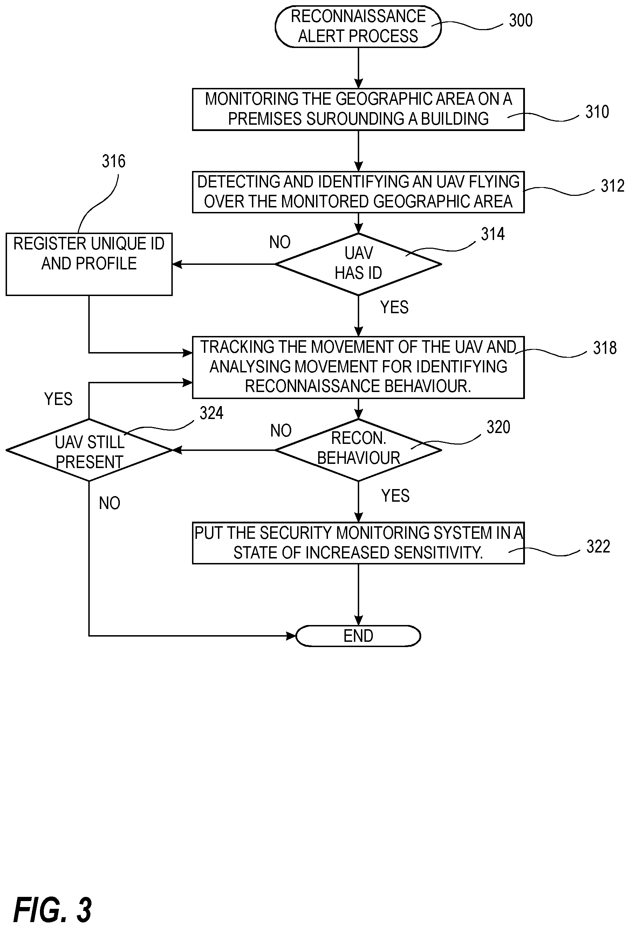

The security monitoring system, according to some embodiments, is configured to detect unmanned aerial vehicles, UAVs, e.g., various types of drones. In particular the monitoring system is configured to detect if drones are used to scope out the premises of the monitoring system, i.e., if someone is using a drone to perform reconnaissance of the premises for planning an intrusion, a burglary, or something like that. This is accomplished according to some embodiments by implementing an reconnaissance alert method schematically depicted by the flowchart of Fig. 3.

The cameras 111, 112, 113, 115, is arranged to monitor the geographic area surrounding the building on the premises 100 and at least some airspace above the ground of that geographic area, step 310. The cameras 111, 112, 113, 115, may provide 360 degrees imagery of the area surrounding the building or at least substantially 360 degrees imagery. In embodiments fulfilling the 360 degrees imagery the 360 degrees imagery may be continuously captured by arranging cameras 111, 112, 113, 115, surrounding the building capturing overlapping imagery. In alternative embodiments the cameras 111, 112, 113, 115, are pan/tilt cameras panning for over time capturing a wider field and thereby achieving capturing of overlapping imagery.

Then, an UAV is detected and identified in the monitored area surrounding the building, step 312. The detection of the UAV may be achieved by at least one of the cameras 111, 112, 113, 115, combined with running the imagery from the camera through an object recognition process. Such object recognition process may be executed on the camera capturing the imagery, in the central unit 208, or in the remote central monitoring station 210. The UAV is identified as either an UAV that has been previously identified by the security monitoring system and therefore have a profile and a unique identity stored in the security monitoring system already or as a new UAV not identified before by the security monitoring system, step 314.

If the detected UAV is not matched to an existing unique identity and profile, then the detected UAV is registered with a unique identity and data from the recognition process is stored in a profile for the UAV, step 316. Then the process continues to step 318. The UAV profile may include visual features from the object recognition process. If the detected UAV is matched to an existing unique identity then the movement of the UAV is tracked and analyzed for suspicious behavior, step 318, e.g. to determine if the UAV is exhibiting behavior that indicates that the UAV potentially is performing reconnaissance of the premises.

If the security monitoring system identifies that the UAV potentially is performing suspicious behavior such as reconnaissance of the premises, step 320, then the security monitoring system is put in a state of increased sensitivity, step 322.

If the security monitoring system does not identify that the UAV potentially is performing suspicious behavior such as reconnaissance of the premises, step 320, then the system continue tracking the movement of the UAV, step 324 and step 318, as long as the UAV is still tracked. If the UAV leaves the premises 100 the process is ended, step 324.

The identification of the UAV and assigning of a unique identifier to the UAV may facilitate the tracking the UAV through out the various camera views. Another use of the unique identifier and especially storing such identifiers for some time, e.g. for days or weeks, is that the security monitoring system may take into account in analysis of a threat level that the UAV has been previously identified. Another aspect of the identification is that UAVs can be white listed, i.e. if the UAV is a known UAV and that it is known that the UAV is a "friendly" UAV, then the security monitoring system should not be put on alert in response to this particular UAV flying around.

The identification of previously identified UAVs is facilitated by relating each unique identity to a UAV profile. The UAV profile may include visual features, which may identified during object recognition, such as color, shape, patterns, ID-tags, etc. The UAV profile may also include other features, e.g., audio features.

There is a chance that different UAVs are visually quite similar and for such UAVs a unique identifier based on only visual features may be difficult to provide.

The tracking of the UAV in a tracking session may include the use of the unique identifier and the UAV profile. However, if the UAV is a standard UAV having the same visual appearance as many other UAVs the tracking may also include tracking the UAV from one view to another by handover techniques like a UAV flying in a camera view of a first camera and moving in a specific direction and then appearing in the neighboring camera view moving in a corresponding direction the likelihood of the UAV in the neighboring camera view being the same UAV leaving the previous camera view is very high. The skilled person would appreciate that there are plenty of other known tracking methods that may be implemented.

Identifying suspicious behavior, such as potential reconnaissance behavior, may be achieved by analyzing the tracked movement. For instance if the tracked movement indicates that the UAV has been flying around the entire building, that the UAV has been hovering in front of the building at points of particularly security interest, such as cameras, sensors, windows, doors, alarm panels etc., and/or that the UAV are passing by the building at a velocity that may indicate reconnaissance of the building.

As described above, the sensitivity of the security monitoring system is increased if the security monitoring system identifies a suspicious behavior, e.g. a reconnaissance behavior. The increase of sensitivity may include increasing the sensitivity of sensors, like motion sensors, IR-sensors, etc. by changing thresholds resulting in notifications or alerts in the system, e.g. sending the notification at a lower signal level than previously. The increase of sensitivity may also or alternatively include activating sensors that have not been active or to start recognizing notifications from sensors that have not been recognized before. Further possible increases of sensitivity may include introducing additional virtual tripwires in camera devices or in analysis of imagery from camera devices.

The increased sensitivity of the security monitoring system may be activated directly and may be active for various time periods. For instance, the increased sensitivity may be activated for at least 24 hours, for at least 48 hours, for at least a week, for at least a month, etc.

In the example above the sensor used to detect a UAV is described as cameras. However, these sensors may be any one of or any combination of, visual light cameras capturing video or frequent still images, infra-red camera capturing video or frequent still images, time-of-flight cameras (TOF-cameras), radar sensor, lidar sensor, audio sensor, etc.

The UAV detection and reconnaissance detection function of the security monitoring system may include software executed in the central unit 208. However, portions of the functionality may be distributed among sensors of the system or portions of the functionality may be executed in a remote central monitoring station 210.

The various embodiments described above are provided by way of illustration only and should not be construed to limit the invention. For example, the principles herein may be applied to any alarm system or security monitoring system, even if it only includes some of the sensors described. Those skilled in the art will readily recognize various modifications and changes that may be made to the present invention without following the example embodiments and applications illustrated and described herein, and without departing from the scope of the present disclosure.

Throughout this specification, the word "may" is used in a permissive sense (i.e. meaning having the potential to), rather than in the mandatory sense (i.e. meaning must).

Throughout this specification, the words "comprise", "include", and variations of the words, such as "comprising" and "comprises", "including", "includes", do not exclude other elements or steps.

As used throughout this specification, the singular forms "a", "an", and "the", include plural referents unless explicitly indicated otherwise. Thus, for example, reference to "an" element includes a combination of two or more elements, notwithstanding use of other terms and phrases for one or more elements, such as "one or more" or "at least one".

The term "or" is, unless indicated otherwise, non-exclusive, i.e. encompassing both "and" and "or". For example, the feature "A or B" includes feature "A", feature "B" and feature "A and B".

Unless otherwise indicated, statements that one value or action is "based on", "in response to" and/or "in dependence on" another condition or value or action, encompass both instances in which the condition or value or action is the sole factor and instances where the condition or value or action is one factor among a plurality of factors.

Unless otherwise indicated, statements that "each" instance of some collection have some property should not be read to exclude cases where some otherwise identical or similar members of a larger collection do not have the property, i.e. each does not necessarily mean each and every.

## Claims

1. A method of operating a security monitoring system of a premises, the method comprising:
monitoring a geographic area surrounding a building on the premises,
detecting an unmanned aerial vehicle, UAV, in the monitored geographic area
increasing the sensitivity of the security monitoring system in response to the UAV being detected in the geographic area.

2. The method according to claim 1, wherein the monitoring of the geographic area surrounding the premises comprises having a plurality of sensors directed outwards from the building.

3. The method according to claim 2, wherein the plurality of sensors comprises at least one camera.

4. The method according to any one of claims 1 to 3, wherein the detecting an unmanned aerial vehicle, UAV, comprises performing object recognition on one or more images captured during monitoring and identifying an object in the one or more images as an UAV.

5. The method according to any one of claims 1 to 4, further comprising identifying the detected UAV as performing reconnaissance of the premises.

6. The method of claim 5, wherein the identifying of the UAV as performing reconnaissance of the premises comprises detecting the UAV at a plurality of sides of the building.

7. The method according to claim 5 or claim 6, wherein the identifying of the UAV as performing reconnaissance of the premises comprises tracking the position of the UAV in relation to the building and identifying that the track of the UAV extends substantially around the building.

8. The method according to any one of the preceding claims, wherein the increasing of the sensitivity of the security monitoring system comprises increasing the sensitivity of at least sections of the system for a specified period of time, wherein the specified period of time is at least 24 hours, at least 48 hours, at least a week, or at least a month.

9. The method according to any of the preceding claims, wherein increasing the sensitivity of the security monitoring system comprises lowering one or more threshold values in the security monitoring system, wherein an alert is generated when a threshold is passed.

10. A security monitoring system of a premises comprising:
at least one sensor arranged to monitor a geographic area surrounding a building on the premises,
at least one control unit configured to detect an unmanned aerial vehicle, UAV, in the geographic area, based on data from the at least one sensor,
wherein the at least one control unit is configured to increase the sensitivity of the security monitoring system in response to an UAV being detected in the geographic area.

11. The security monitoring system according to claim 10, wherein the control unit is further configured to identify detected UAVs as performing reconnaissance of the premises.

12. The security monitoring system according to claim 10 or claim 11, wherein the plurality of sensors comprises at least one camera.

13. The security monitoring system according to any one of claims 10 to 12, wherein the at least one control unit is configured such that increasing the sensitivity of the security monitoring system comprises lowering one or more thresholds that should be passed by a signal from the at least one sensor for generating an alarm notice.

14. A data processing system in a security monitoring system, the data processing system comprising means for carrying out the method of any of claims 1 to 9.
